Europäisches Patentamt

European Patent Office

Office européen des brevets

(11) Publication number: **0 127 938**
**A1**

# EUROPEAN PATENT APPLICATION

(21) Application number: **84302805.1**

(22) Date of filing: **26.04.84**

(51) Int. Cl.³: **A 23 K 1/08**
**A 23 C 21/02**

(30) Priority: **26.04.83 IE 952/83**

(43) Date of publication of application:
**12.12.84 Bulletin 84/50**

(84) Designated Contracting States:
**AT BE CH DE FR GB IT LI LU NL SE**

(71) Applicant: **KERRY CO-OPERATIVE CREAMERIES LIMITED**
**Princes Street**
**Tralee County Kerry(IE)**

(72) Inventor: **Kierstan, Marek Piotr Jacek**
**Princes Street**
**Tralee County Kerry(IE)**

(74) Representative: **SERJEANTS**
**25, The Crescent King Street**
**Leicester, LE1 6RX(GB)**

(54) **Whey derivatives.**

(57) A whey derivative suitable for use in the production of silage from grass or other plant material, or for use as an animal feed additive, is prepared by the enzymatic treatment of liquid whey, involving treating the whey either sequentially or simultaneously with protein-hydrolysing and carbonhydrate- hydrolysing enzymes, so as hydrolyse protein and carbohydrate contained in the whey, and the resulting liquid is then concentrated to yield a product having a high solids level.

EP 0 127 938 A1

Croydon Printing Company Ltd

## WHEY DERIVATIVES

This invention relates to preparations which are useful in the production of silage from grass or other plant material, or as animal feed additives or supplements. In particular, the invention relates to a method of preparing from whey produced as a by-product in the dairy industry, derivatives which will be suitable for use for the aforementioned purposes.

The principal object of the invention is to provide a method which will make it possible to obtain from liquid whey, preparations of reduced volume and good stability, which will be suitable for the aforementioned uses.

The total solids level that can be attained in whey and other by-product streams produced in the dairy industry is generally limited by the solubility of the lactose contained therein. The solubility of this component can be increased by hydrolysis using chemical or enzymic techniques.

The invention is based on our observation that when using certain crude preparations of lactose-hydrolysing enzymes to hydrolyse lactose in whey and other dairy streams, it was possible to produce products with superior properties. We found that with these crude enzyme preparations, it was possible to obtain solutions of low viscosity at solids levels much higher than those normally attained when using lactose-hydrolysing enzymes. We then noted that this enhancing effect was the result of proteolytic enzyme contamination, as a result of which we established that by including treatment with certain proteolytic enzymes in processes involving the hydrolysis of whey with lactose-hydrolysing enzymes, it was possible to produce products with superior properties on a regular and reliable basis.

This result was surprising as, hitherto, it had been found that proteolysis of milk proteins usually results in precipitation and disimprovement in flow characteristics. Similarly, most milk proteins can only be partially solubilised, and this following denaturation and precipitation, and in these situations significant amounts of insoluble material are normally generated.

We believe that a likely explanation of our finding, is that hydrolysis of whey and other milk proteins in solution by our method results in a decrease of protein viscosity, but this is controlled so that it does not cause protein and peptide precipitation.

In general it is our finding that by adding protease enzymes to a whey-hydrolysis system, either simultaneously with the addition of lactose-hydrolysing

0127938

- 3 -

enzymes, or before or after such addition, it is possible to hydrolyse the protein present in such a a manner as to enable solutions with high solids levels to be prepared, which are highly stable both microbiogically and chemically, and which can be readily handled as compared with media containing non-hydrolysed protein. This leads to the solutions prepared being highly suitable for use in the treatment of grass for silage and as a component in animal feed. Hitherto, the use of whey for these purposes has given rise to difficulty, because whey concentration was a limiting factor and concentrated whey caused handling problems.

Accordingly the invention provides a method for preparing a whey derivative for use in the production of silage from grass or other plant material, or for use as an animal feed additive, by the enzymatic treatment of liquid whey, characterised in that whey is treated either sequentially or simultaneously with protein-hydrolysing and carbohydrate-hydrolysing enzymes, so as hydrolyse protein and carohydrate contained in the whey, and the resulting liquid is then concentrated.

We have found that when both the protein and carbohydrate components are hydrolysed in this way, the resulting product is of relatively low viscosity and it can be readily concentrated without the lactose or other carbohydrate crystallizing. The concentrated product is then suitable for use as a silage additive, or as a component in animal feeds, as a substitute for molasses, for example.

In applying the method of the invention to whey (and also to other substances encountered in the dairy industry) it is possible for the whole of the protein and carbohydrate content to be hydrolysed enzymatically Alternatively a significant percentage of the protein present in whey can be removed by ultrafiltration or heat treatment and the remaining soluble protein component is then hydrolysed by protease enzyme treatment. The presence of hydrolysed protein as opposed to unhydrolysed protein may be biologically significant in the use of high solids streams in certain applications, especially where they are used as promoters of microbial growth or as feeds. In both instances the biological system may utilise the hydrolysed protein more efficiently than the unhydrolysed protein. Consequently in certain applications it may also be beneficial to supplement the product with crude or refined hydrolysed protein or other products. It may also be beneficial in respect of use or storage, that the product be acidic. This may be effected by addition of organic or mineral acids, or by generating acid conditions by omitting to add alkali during the action of the protease enzyme. Alternatively, microbial fermentation can be employed to promote in situ acid production. The presence of microbial species, especially Lactobacillus sp. may be beneficial in certain applications, such as in the use of these streams as ensilage promoters.

The invention will now be described in greater detail, by reference to the following Examples which illustrate the preparation of whey derivatives by the method of the invention.

EXAMPLE 1

A whey solution is prepared, having a solids level of 5 to 30%, either by concentrating liquid whey obtained as a dairy by-product, or by reconstituting whey powder. The solution is adjusted to pH 5.5 to 7.0 with 4N potassium hydroxide and the temperature is adjusted to 40°C. To the resulting solution there is added 0.15% by weight of a commercially available β-galactosidase of such an activity as to give hydrolysis of greater than 80% of the lactose within a five hour period. Either at the same time, or within one hour of the β-galactosidase addition, an addition of a commercially available proteolytic enzyme is made. The preferred enzyme is that supplied by Novo under the designation Novo Alcalase 0.6L, which is added at levels up to 0.1% by weight so as to attain approximately 10% protein hydrolysis in a four to five hour period. Following the incubation period, the resulting solution is concentrated by evaporation to 70% total solids content.

EXAMPLE 2

In a similar manner to Example 1, a whey solution is prepared with a solids level of 5 to 30% solids, and this is adjusted to pH 8.5 with 4N potassium hydroxide and the temperature is adjusted to 40°C. To this an addition of a commercially available proteolytic enzyme is made. Again, the preferred enzyme is Novo Alcalase 0.6L which is added to levels up to 0.1% by weight so as to attain approximately 10% protein hydrolysis in three to four hours. During this time the pH of the system falls to about pH 6.5 and is adjusted to pH 6.3 with concentrated hydrochloric acid or 4N sodium hydroxide as required. To this, 0.15% by weight of commercially available β-galactosidase is added, of such activity as to give hydrolysis of greater than 80% of the lactose within a five hour period. At the end of the incubation period the resulting solution is concentrated by evaporation to 70% total solids content.

The products of Examples 1 and 2 can be supplemented, or their pH or solids levels may be adjusted so as to provide the desired characteristics for particular applications.

It will be noted that the procedures described above in Examples 1 and 2 result in high levels of protein hydrolysis of 10% or more.  Such a high level of hydrolysis has not been achieved hitherto in connection with protein hydrolysis procedures.

The derivatives prepared in accordance with Examples 1 and 2 have been found to be highly effective for use in connection with the ensilage of grass, for which purpose they may be applied by spraying at the rate of 1½ to 2½ gallons per ton of grass.

The major advantage of the method of the invention is the ability of the hydrolysed product to be concentrated to a high solids level while remaining microbially and chemically stable.  The high solids levels attained by the application of the invention overcome problems associated with whey and other dairy streams when concentrated by techniques in use hitherto, in that the volumes which are applied can be greatly reduced.

The details of the processes described above have, of course, been given by way of example only and may be modified in various ways, within the scope of the invention.

CLAIMS:

1. A method for preparing a whey derivative for use in the production of silage from grass or other plant material, or for use as an animal feed additive, by the enzymatic treatment of liquid whey, characterised in that whey is treated either sequentially or simultaneously with protein-hydrolysing and carbohydrate-hydrolysing enzymes, so as hydrolyse protein and carbohydrate contained in the whey, and the resulting liquid is then concentrated.

2. A method according to claim 1, characterised in that the treatment with the protein-hydrolysing enzyme or enzymes results in the hydrolysis of at least 10% of the protein present in the liquid whey which is subjected to this treatment.

3. A method according to claim 1 or claim 2, characterised in that prior to treatment with the enzymes, the whey is subjected to ultrafiltration to remove a part of the protein.

4. A method according to any of the preceding claims, characterised in that after the treatment with the enzymes, the resulting liquid is concentrated by evaporation.

5. A method according to any of the preceding claims, characterised in that the carbohydrate – hydrolysing enzyme used is β-galactosidase.

6. A method according to any of the preceding claims, characterised in that an organic acid or mineral acid is added after the concentration step.

7. A method according to any of the preceding claims, characterised in that a microbial culture is added after the concentration step.

8. A whey derivative for use in the production of silage from grass or other plant material, or for use as an animal feed additive, characterised in that it is prepared by a process according to any of the preceding claims.

## European Patent Office

**EUROPEAN SEARCH REPORT**

EP 84 30 2805

### DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| X | FR-A-2 406 665 (LYCKEBY STARKELSEFORADLING AB.) <br> * Example 11 * | 1,2,5 | A 23 K 1/08 <br> A 23 C 21/02 |
| X | CHEMICAL ABSTRACTS, vol. 98, no. 7, February 1983, page 549, no. 52379y, Columbus, Ohio, US; A.M. O'KEEFFE et al.: "Manufacture of a stable filled milk concentrate (50% solids) for calf-feeding" & UTIL. ENZYMES TECHNOL. ALIMENT., SYMP. INT. 1982, 259-66 | 1,2,5, 6 | |
| Y | JOURNAL OF FOOD SCIENCE, vol. 47, no. 6, November-December 1982, pages 1895-1898,1911, Chicago, Illinois, US; R. HERNANDEZ et al.: "Production and characterization of an enzymatic hydrolysate of skim milk lactose and proteins" <br> * Page 1895, column 2; page 1896, column 2, paragraph 1; page 1897, column 1 - page 1898, column 2; page 1911, column 1 * | 1,2,3, 4,5,8 | TECHNICAL FIELDS SEARCHED (Int. Cl ³) <br><br> A 23 K <br> A 23 C |
| Y | US-A-2 781 266 (E. STIMPSON) <br><br> * Claims 1,2; Column 2, lines 3-37 * | 1,2,3, 4,5,8 | |

--- -/-

The present search report has been drawn up for all claims

| Place of search | Date of completion of the search | Examiner |
|---|---|---|
| THE HAGUE | 03-08-1984 | DESMEDT G.R.A. |

# EUROPEAN SEARCH REPORT

European Patent Office

## DOCUMENTS CONSIDERED TO BE RELEVANT

| Category | Citation of document with indication where appropriate, of relevant passages | Relevant to claim | CLASSIFICATION OF THE APPLICATION (Int Cl ³) |
|---|---|---|---|
| A | JOURNAL OF FOOD SCIENCE, vol. 44, no. 3, 1979, pages 896-899; F.C. KNOPF et al.: "Optimization of a lactose hydrolysis process" * Page 896, column 1; page 896, figure 1 * | 1,3,4, 5 | |
| A | CHEMICAL ABSTRACTS, vol. 98, no. 23, June 1983, page 519, no. 196734h, Columbus, Ohio, US; & PL - A - 118 649 (AKADEMIA ROLNICZO-TECHNICZA, OLSZTYN) 30-11-1982 * Abstract * | 7,8 | |

TECHNICAL FIELDS SEARCHED (Int Cl ³)

The present search report has been drawn up for all claims

| Place of search | Date of completion of the search | Examiner |
|---|---|---|
| THE HAGUE | 03-08-1984 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82